# EUROPÄISCHE PATENTANMELDUNG

(11) **EP 2 009 531 A1**
(43) Veröffentlichungstag der Anmeldung: **31.12.2008**
(21) Anmeldenummer: 07019943.5
(22) Anmeldetag: 11.10.2007
(51) Int. Cl.: G05B 19/409, G06F 3/048

(54) **Bedieneinrichtung zur Bedienung einer Werkzeugmaschine, Produktionsmaschine und/oder eines Roboters**

(71) Anmelder: SIEMENS AKTIENGESELLSCHAFT, 80333 München (DE)
(72) Erfinder: Scheuermann, Uwe, 90431 Nürnberg (DE)

(57) **Zusammenfassung**

Die Erfindung betrifft eine Bedieneinrichtung zur Bedienung einer Werkzeugmaschine, Produktionsmaschine und/oder eines Roboters, wobei die Bedieneinrichtung (1) einen berührungsempfindlichen Bildschirm (2) aufweist, wobei vom Bildschirm (2) ein Tastenfeld (3) visualisierbar ist, wobei das Tastenfeld (3) mehrere Tasten aufweist, wobei die Bedieneinrichtung (1) derart ausgebildet ist, dass bei einer Berührung des Bildschirms (2) im Bereich des Tastenfelds (3), die in unmittelbarer Nähe vom Ort (8) der Berührung des Bildschirms lokalisierten Tasten (4,5,6,7), vergrößert dargestellt werden. Weiterhin betrifft die Erfindung ein diesbezügliches Verfahren zur Bedienung einer Werkzeugmaschine, Produktionsmaschine und/oder eines Roboters mittels einer Bedieneinrichtung (1). Die Erfindung schafft eine Bedieneinrichtung (1) und ein Verfahren zur Bedienung einer Werkzeugmaschine, Produktionsmaschine und/oder eines Roboters, die eine einfache und sichere Bedienung über einen berührungsempfindlichen Bildschirm (2) ermöglicht.

## Beschreibung

Die Erfindung betrifft eine Bedieneinrichtung zur Bedienung einer Werkzeugmaschine, Produktionsmaschine und/oder eines Roboters.

Handelsübliche Bedieneinrichtungen zur Bedienung von Werkzeugmaschinen, Produktionsmaschinen und/oder von Robotern weisen heute oftmals berührungsempfindliche Bildschirme, sogenannte "Touchscreens", auf. Berührungsempfindliche Bildschirme besitzen eine berührungssensitive Oberfläche, die es erlaubt den Ort der Berührung des Bildschirms zu lokalisieren um davon abgeleitet Bedienhandlungen durchzuführen. In der Regel wird dabei handelsüblich zur Bedienung der Maschine vom berührungsempfindlichen Bildschirm ein Tastenfeld visualisiert, das mehrere Tasten aufweist. Durch eine Berührung des Bildschirms am Ort an der die entsprechende Taste vom Bildschirm dargestellt wird, wird die entsprechende Taste vom Bediener angewählt. Die Tasten sind dabei in der Regel nur sehr klein dargestellt, was eine Eingabe für den Bediener oft sehr erschwert, da er die Tastenbeschriftung zum einen nur schwer erkennen kann und zum anderen seine Fingerkuppe in der Regel zu groß für eine sichere Anwahl einer anzuwählenden Taste, d.h. für die sichere Anwahl einer Taste, die der Anwender anwählen möchte, ist. Deshalb wird häufig zur Eingabe ein sogenannter Griffel (eine Art von Stift) verwendet, um die Treffsicherheit bei der Anwahl der anzuwählenden Taste, z.B. bei einer Zeicheneingabe, zu erhöhen. Häufig ist der Griffel aber, insbesondere bei Bedieneinrichtungen von Werkzeugmaschinen, Produktionsmaschinen und/oder von Robotern nicht auffindbar, da dieser irgendwo in der Werkshalle vergessen wurde.

Es ist auch bekannt, auf eine virtuelle Tastatur zu verzichten und eine Handschrifterkennung zur Zeicheneingabe zu verwenden. Eine solche Handschrifterkennung ist jedoch oft fehlerbehaftet.

Der Erfindung liegt die Aufgabe zugrunde, eine Bedieneinrichtung und ein Verfahren zur Bedienung einer Werkzeugmaschine, Produktionsmaschine und/oder eines Roboters zu schaffen, die eine einfache und sichere Bedienung über einen berührungsempfindlichen Bildschirm ermöglicht.

Diese Aufgabe wird gelöst durch eine Bedieneinrichtung zur Bedienung einer Werkzeugmaschine, Produktionsmaschine und/oder eines Roboters, wobei die Bedieneinrichtung einen berührungsempfindlichen Bildschirm aufweist, wobei vom Bildschirm ein Tastenfeld visualisierbar ist, wobei das Tastenfeld mehrere Tasten aufweist, wobei die Bedieneinrichtung derart ausgebildet ist, dass bei einer Berührung des Bildschirms im Bereich des Tastenfelds, die in unmittelbarer Nähe vom Ort der Berührung des Bildschirms lokalisierten Tasten, vergrößert dargestellt werden.

Weiterhin wird diese Aufgabe gelöst durch ein Verfahren zur Bedienung einer Werkzeugmaschine, Produktionsmaschine und/oder eines Roboters mittels einer Bedieneinrichtung, die einen berührungsempfindlichen Bildschirm aufweist, wobei vom Bildschirm ein Tastenfeld visualisiert wird, wobei das Tastenfeld mehrere Tasten aufweist, wobei bei einer Berührung des Bildschirms im Bereich des Tastenfelds, die in unmittelbarer Nähe vom Ort der Berührung des Bildschirms lokalisierten Tasten, vergrößert dargestellt werden.

Vorteilhafte Ausbildungen der Bedieneinrichtung ergeben sich analog zu vorteilhaften Ausbildungen des Verfahrens und umgekehrt.

Vorteilhafte Ausbildungen der Erfindung ergeben sich aus den abhängigen Ansprüchen.

Es erweist sich als vorteilhaft, wenn die Bedieneinrichtung derart ausgebildet ist, dass von der Bedieneinrichtung auf Anwahl einer anzuwählenden vergrößert dargestellten Taste erkannt wird, wenn die Berührung nach Darstellung der vergrößerten Tasten aufrechterhalten bleibt und der Ort der Berührung auf den Bereich der anzuwählenden vergrößert dargestellten Taste verschoben wird und die Berührung des Bildschirms anschließend beendet wird. Hierdurch wird eine einfache Anwahl einer Taste ermöglicht.

Weiterhin erweist es sich als vorteilhaft, wenn die Bedieneinrichtung derart ausgebildet ist, dass nach Verschiebung des Orts der Berührung auf den Bereich der vergrößert dargestellten Taste, die vergrößert dargestellte Taste gekennzeichnet dargestellt wird. Durch die gekennzeichnete Darstellung, z.B. in Form einer farblichen Darstellung der Taste mit einer speziellen Farbe, kann der Bediener sicher erkennen welche Taste er, falls er den Finger vom Bildschirm nimmt und solchermaßen die Berührung des Bildschirms beendet, anwählt.

Ferner erweist es sich als vorteilhaft, wenn die Bedieneinrichtung derart ausgebildet ist, dass von der Bedieneinrichtung auf Anwahl einer anzuwählenden vergrößert dargestellten Taste erkannt wird, wenn der Bildschirm im Bereich der anzuwählenden vergrößert dargestellten Taste erneut berührt wird. Hierdurch wird ebenfalls eine einfache Anwahl einer Taste ermöglicht.

Ein Ausführungsbeispiel der Erfindung ist in der Zeichnung dargestellt und wird im Folgenden näher erläutert. Dabei zeigen:
- FIG 1: eine erfindungsgemäße Bedieneinrichtung und
- FIG 2: eine erfindungsgemäße Bedieneinrichtung mit vergrö- ßert dargestellten Tasten.

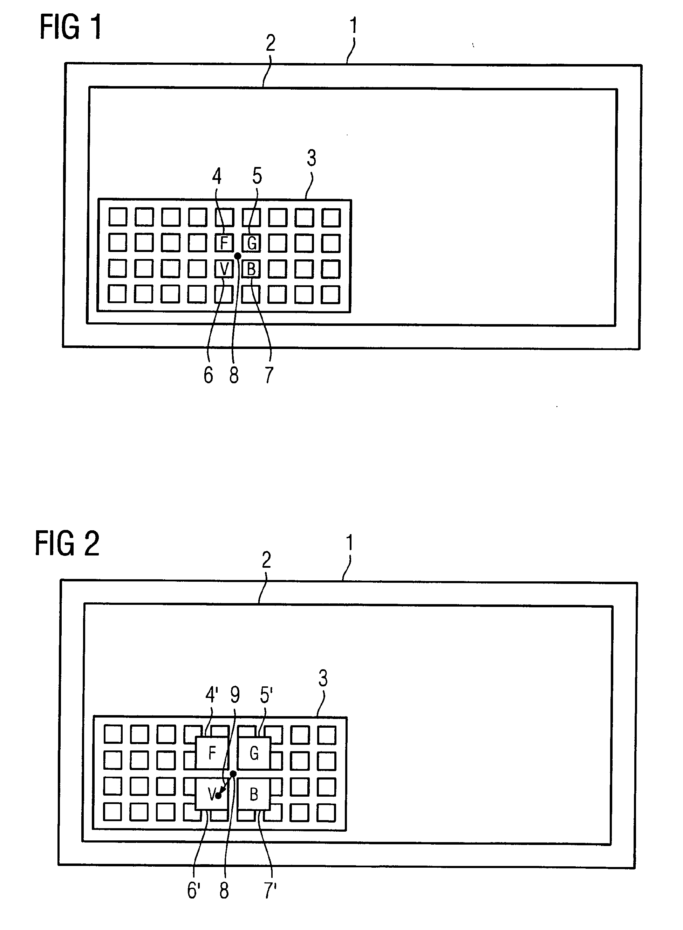

In FIG 1 ist in Form einer schematisierten Darstellung eine erfindungsgemäße Bedieneinrichtung 1 dargestellt. Die Bedieneinrichtung 1 weist einen berührungsempfindlichen Bildschirm 2 auf, wobei vom Bildschirm 2 zur Bedienung ein Tastenfeld 3, das mehrere Tasten aufweist, visualisiert wird. Der Übersichtlichkeit halber sind in FIG 1 nur die Tasten 4, 5, 6 und 7 mit Bezugszeichen versehen. Das Tastenfeld 3 kann dabei z.B. in Form einer virtuellen Tastatur, z.B. zur Eingabe von Zeichen und/oder Zahlen, ausgebildet sein. Die einzelnen Tasten sind dabei mit einer Beschriftung versehen, so dass der Anwender anhand der Beschriftung sieht welches Zeichen oder welche Zahl er bei Anwahl der entsprechenden Taste eingibt. Der Übersichtlichkeit halber sind in FIG 1 nur die Tasten 4, 5, 6 und 7 mit entsprechenden Beschriftungen versehen. Die Taste 4 weist die Beschriftung "F", die Taste 5 weist die Beschriftung "D", die Taste 6 weist die Beschriftung "V" und die Taste 7 die Beschriftung "B", auf.

Wie sich anhand von FIG 1 unschwer erkennen lässt, sind zum einen die Beschriftungen nur schwer erkennbar und zum anderen vom Bediener auch nur schwer anwählbar, so dass es sehr schwer ist, eine eindeutige entsprechende Berührung auf den die Taste darstellenden Bereich auf dem Bildschirm auszuführen, so dass der Bediener auf die Verwendung von Hilfsmitteln, wie z.B. einem Griffel, zur Anwahl einer anzuwählenden Taste, d.h. einer Taste die er anwählen möchte, greifen muss.

Hier nun setzt die Erfindung ein. Erfindungsgemäß ist die Bedieneinrichtung 1 derart ausgebildet, dass bei einer Berührung des Bildschirms 2 im Bereich des Tastenfeldes 3, die in unmittelbarer Nähe vom Ort 8 der Berührung des Bildschirms 3 lokalisierten Tasten, vergrößert dargestellt werden. Im Rahmen des Ausführungsbeispiels ist der Ort 8 der Berührung, d.h. die Stelle auf dem Tastenfeld an der der Bediener mit seinem Finger den Bildschirm 2 berührt, in unmittelbarer Nähe der Tasten 4, 5, 6 und 7 lokalisiert.

Erfindungsgemäß werden die in unmittelbarer Nähe vom Ort 8 der Berührung lokalisierten Tasten, die im Rahmen des Ausführungsbeispiels durch die Tasten 4, 5, 6 und 7 gegeben sind, vergrößert dargestellt.

In FIG 2 sind die solchermaßen in vergrößert dargestellten Tasten 4', 5', 6' und 7' dargestellt. Ansonsten entspricht der Aufbau gemäß FIG 2 den Aufbau gemäß FIG 1, so dass in FIG 2 gleiche Elemente mit gleichen Bezugszeichen versehen sind wie in FIG 1. Die Taste 4 wird in Form der vergrößerten Taste 4', die Taste 5 in Form der vergrößerten Taste 5', die Taste 6 in Form der vergrößerten Taste 6' und die Taste 7 in Form der vergrößerten Taste 7' dargestellt.

Wie sich anhand von FIG 2 unmittelbar erkennen lässt, können nun vom Bediener die Beschriftungen der Tasten leicht erkannt werden, so dass eine einfache und zuverlässige Bedienung ermöglicht wird.

Um die Bedienung nur noch weitergehend zu vereinfachen, ist die Bedieneinrichtung derart ausgebildet, dass von der Bedieneinrichtung 1 auf Anwahl einer anzuwählenden vergrößert dargestellten Taste erkannt wird, wenn die Berührung nach Darstellung der vergrößerten Tasten 4', 5', 6' und 7' aufrechterhalten bleibt und der Ort 8 der Berührung auf den Ort der anzuwählenden vergrößert dargestellten Taste verschoben wird und die Berührung des Bildschirms anschließend vom Bediener, durch z.B. Zurückziehen seines Fingers, beendet wird.

Die anzuwählende vergrößert dargestellte Taste, d.h. die Taste die der Bediener anzuwählen wünscht, ist im Rahmen des Ausführungsbeispiels durch die vergrößerte Taste 6' gegeben. Zur Eingabe des Zeichens "V" berührt der Bediener zunächst in unmittelbarer Umgebung der Taste 6 den Bildschirm 2, worauf die in unmittelbarer Nähe des Berührorts lokalisierten Tasten, vergrößert dargestellt werden. Im Rahmen des Ausführungsbeispiels sind dies die vergrößert dargestellten Tasten 4', 5', 6' und 7'. Anschließend verschiebt er bei noch berührten Bildschirm, z.B. durch Verschieben des Fingers, den Ort der Berührung (des Fingers) auf den Bereich der anzuwählenden vergrößert dargestellten Taste 6', worauf die Taste 6', z.B. mittels einer farblichen Hinterlegung, gekennzeichnet dargestellt wird. In FIG 2 ist das Verschieben des Fingers, d.h. das Verschieben des Orts der Berührung mit einem Pfeil 9 dargestellt. Wenn anschließend die Berührung des Bildschirms beendet wird, in dem der nun auf der Taste 6' befindliche Finger vom Bildschirm weggenommen wird, gilt die anzuwählende Taste 6', d.h. in diesem Fall der Buchstabe V als vom Bediener angewählt und wird somit als Eingabe von der Bedieneinrichtung 1 übernommen.

Alternativ oder zusätzlich kann die Bedieneinrichtung auch derart ausgebildet sein, dass von der Bedieneinrichtung auf Anwahl einer anzuwählenden vergrößert dargestellten Taste 6' erkannt wird, wenn der Bildschirm im Bereich der anzuwählenden vergrößert dargestellten Taste 6' erneut berührt wird. Diese Möglichkeit der Anwahl einer anzuwählenden vergrößert dargestellten Taste unterscheidet sich von dem oben genannten Anwählvorgang dadurch, dass die Berührung des Bildschirms 2 nach dem die in unmittelbarer Nähe des Orts der Berührung lokalisierten Tasten vergrößert dargestellt werden, durch z.B. Zurücknehmen des Fingers, die Berührung unterbrochen wird und anschließend der Bildschirm durch erneutes Berühren im Bereich der anzuwählenden vergrößert dargestellten Taste erneut berührt wird.

Es sei an dieser Stelle angemerkt, dass im Rahmen der Erfindung, unter in unmittelbarer Nähe vom Ort der Berührung des Bildschirms lokalisierten Tasten, vorzugsweise die direkt um den Ort der Berührung lokalisierten Tasten verstanden werden.

Selbstverständlich kann der Ort der Berührung dabei auch schon direkt auf einer bestimmten Taste liegen, wobei in diesem Fall vorzugsweise die direkt um diese bestimmte Taste lokalisierten Tasten als in unmittelbarer Nähe vom Ort der Berührung des Bildschirms lokalisierten Tasten, verstanden werden.

Durch die Erfindung wird die Sicherheit bei der Bedienung von Werkzeugmaschinen, Produktionsmaschinen Robotern durch Vermeidung von Fehleingaben erhöht.

## Patentansprüche

1. Bedieneinrichtung zur Bedienung einer Werkzeugmaschine, Produktionsmaschine und/oder eines Roboters, wobei die Bedieneinrichtung (1) einen berührungsempfindlichen Bildschirm (2) aufweist, wobei vom Bildschirm (2) ein Tastenfeld (3) visualisierbar ist, wobei das Tastenfeld (3) mehrere Tasten aufweist, wobei die Bedieneinrichtung (1) derart ausgebildet ist, dass bei einer Berührung des Bildschirms (2) im Bereich des Tastenfelds (3), die in unmittelbarer Nähe vom Ort (8) der Berührung des Bildschirms lokalisierten Tasten (4,5,6,7), vergrößert dargestellt werden.

2. Bedieneinrichtung nach Anspruch 1, **dadurch gekennzeichnet, dass** die Bedieneinrichtung derart ausgebildet ist, dass von der Bedieneinrichtung (1) auf Anwahl einer anzuwählenden vergrößert dargestellten Taste (6') erkannt wird, wenn die Berührung nach Darstellung der vergrößerten Tasten (4',5',6',7') aufrechterhalten bleibt und der Ort (8) der Berührung auf den Bereich der anzuwählenden vergrößert dargestellten Taste (6') verschoben wird und die Berührung des Bildschirms (2) anschließend beendet wird.

3. Bedieneinrichtung nach Anspruch 2, **dadurch gekennzeichnet, dass** die Bedieneinrichtung derart ausgebildet ist, dass nach Verschiebung des Orts (8) der Berührung auf den Bereich der vergrößert dargestellten Taste (6'), die vergrößert dargestellte Taste (6') **gekennzeichnet** dargestellt wird.

4. Bedieneinrichtung nach einem der Ansprüche 1 bis 3, **dadurch gekennzeichnet , dass** die Bedieneinrichtung derart ausgebildet ist, dass von der Bedieneinrichtung (1) auf Anwahl einer anzuwählenden vergrößert dargestellten Taste (6') erkannt wird, wenn der Bildschirm (1) im Bereich der anzuwählenden vergrößert dargestellten Taste erneut berührt wird.

5. Werkzeugmaschine, Produktionsmaschine und/oder eines Roboter mit einer Bedieneinrichtung nach einem der Ansprüche 1 bis 4.

6. Verfahren zur Bedienung einer Werkzeugmaschine, Produktionsmaschine und/oder eines Roboters mittels einer Bedieneinrichtung (1), die einen berührungsempfindlichen Bildschirm (2) aufweist, wobei vom Bildschirm (2) ein Tastenfeld (3) visualisiert wird, wobei das Tastenfeld mehrere Tasten aufweist, wobei bei einer Berührung des Bildschirms (2) im Bereich des Tastenfelds (3), die in unmittelbarer Nähe vom Ort (8) der Berührung des Bildschirms lokalisierten Tasten (4,5, 6,7), vergrößert dargestellt werden.
